Europäisches Patentamt

European Patent Office

Office européen des brevets

(11) Numéro de publication: **0 039 271**
**B1**

(12) FASCICULE DE BREVET EUROPEEN

(45) Date de publication du fascicule du brevet: **14.12.83**

(51) Int. Cl.³: **B 60 T 13/24**

(21) Numéro de dépôt: **81400596.3**

(22) Date de dépôt: **14.04.81**

(54) Servo-moteur d'assistance au freinage à renfort de fixation.

(30) Priorité: **25.04.80 FR 8009346**

(43) Date de publication de la demande:
**04.11.81 Bulletin 81/44**

(45) Mention de la délivrance du brevet:
**14.12.83 Bulletin 83/50**

(84) Etats contractants désignés:
**DE GB**

(56) Documents cités:
**FR - A - 2 427 496**
**FR - A - 2 434 738**

(73) Titulaire: **SOCIETE ANONYME D.B.A.**
**Centre Paris Pleyel**
**F-93521 St-Denis Cédex 01 (FR)**

(72) Inventeur: **Hauduc, Jean**
**28, rue des Marroniers**
**F-93290 Tremblay-les-Gonesses (FR)**

(74) Mandataire: **Le Moenner, Gabriel et al,**
**SERVICE BREVETS BENDIX 44, Rue François 1er**
**F-75008 Paris (FR)**

Courier Press, Leamington Spa, England.

# Servomoteur d'assistance au freinage à renfort de fixation

L'invention concerne au servomoteur d'assistance au freinage à renfort de fixation et plus particulièrement un perfectionnement à un tel dispositif, permettant d'envisager son montage sur le véhicule au moyen de seulement deux vis de fixation.

Les servomoteurs à dépression sont bien connus dans la technique du freinage. Un dispositif de ce genre est généralement intercalé entre la pédale de frein et le maître-cylindre. Il comporte un boîtier admettant un axe de symétrie le long duquel une force d'actionnement peut être transmise par l'intermédiaire d'une tige d'actionnement axiale mécaniquement couplée à la pédale de frein et comprenant deux parois d'extrémité parallèles, une première paroi destinée à être fixée à une partie fixe du véhicule et une seconde paroi sur laquelle est directement monté la maître-cylindre de sorte que le boîtier du servomoteur constitue en même temps le support du maître-cylindre. Par conséquent, l'effort de freinage développé par le conducteur du véhicule actionnant la pédale de frein se trouver répercuté à l'entrée du maître-cylindre par l'intermédiaire de la tige d'actionnement précitée. Un effort de réaction est donc développé sur le boîtier du servomoteur, qui tend à déformer celui-ci dans la direction axiale, cet effort étant repris au niveau de la première paroi précitée au moyen de quatre vis de montage dont les têtes sont logées à l'intérieur du boîtier du servomoteur et dont les parties filetées font saille à l'extérieur du boîtier, perpendiculairement à cette première paroi dans une direction parallèle à l'axe de symétrie précité. Ces quatre vis permettent la fixation à une partie fixe du véhicule. Elles sont agencées de façon équidistante par rapport à l'axe de symétrie précité et régulièrement réparties tout autour de celui-ci.

D'autre part, on a cherché à alléger l'ensemble du servomoteur, notamment en réduisant l'épaisseur de la tôle du boîtier et/ou en utilisant des matéraux de densité plus faible, comme par exemple l'aluminium. Ceci a amené à disposer un renfort annulaire à l'intérieur du boîtier entre les têtes des quatre vis de montage précitées et la face interne de ladite première paroi; ceci dans le but que les efforts d'actionnement se répartissent sur une large surface de ladite première paroi de façon à préserver celle-ci de toute déformation permanente au voisinage des têtes des vis de montage. Un servomoteur de ce type est décrit dans le document EP—A—0 021 969 au nom de la demanderesse (état de la technique selon article 54(3) de la C.B.E.). Or, on s'est récemment attaché à proposer un servomoteur dont la fixation au véhicule ne s'opère que par l'intermédiaire de deux vis de montage, ceci bien évidemment dans le but de gagner du temps au montage à la chaîne du véhicule (voir également le document EP—A—0 021 969 sus-mentionné). On a alors observé que le renfort annulaire précité ne remplissait plus son rôle de répartiteur de contraintes de façon aussi satisfaisante que précédemment, lesdits contraintes se localisant essentiellement au voisinage des deux vis de montage. L'invention permet de résoudre ce problème en prévoyant un renfort annulaire initialement déformé pour être containt au montage et permettre ainsi une meilleure dispersion des contraintes sur sensiblement toute la surface de ladite première paroi.

Plus précisément, l'invention concerne donc un servomoteur d'assistance au freinage, du type à dépression, comportant un boîtier admettant un axe de symétrie le long duquel une force d'actionnement peut être transmise par l'intermédiaire d'une tige d'actionnement axiale reliée à la pédale de frein, et comprenant deux parois d'extrémité sensiblement parallèles, une première paroi destinée à être fixée à une partie fixe du véhicule et une second paroi sur laquelle un maître-cylindre de commande de freinage peut être monté dans le prolongement axial de la tige d'actionnement pour recevoir à son entrée la force d'actionnement, le servomoteur étant prévu pour être fixé à ladite partie fixe au moyen de deux via ou analogues dont les parties filetées font saillie perpendiculairement à l'extérieur de la première paroi, sensiblement parallèlement à l'axe de symétrie et de part et d'autre de celui-ci et ces vis étant en contact avec la face interne de la première paroi par l'intermédiaire d'un renfort annulaire, caractérisé en ce que le renfort a, avant montage, un profil initial gauche avec des zones d'appui pour les vis décalées axialement par rapport à des zones de contact initial du renfort avec la face interne de la première paroi ces dernières étant décalées angulairement des zones d'appui de sorte que, lorsque le renfort est placé initialement en contact par ces zones de contact contre la face interne de la première paroi, un jeu axial est ménagé entre la face interne et la face adjacente de chaque zone d'appui du renfort.

Le servomoteur peut être conçu pour que le renfort ne soit plaqué contre cette face interne qu'au moment du montage du servomoteur sur la partie fixe précitée du véhicule. Au contraire, selon une variante, les deux vis peuvent être préalalblement serties ou soudées à ladite première paroi du boîtier du servomoteur, avant montage de celui-ci sur le véhicule, et dans ce cas c'est le sertissage ou la soudure de ces vis qui permet de réaliser l'application forcée du renfort annulaire contre ladite face interne.

L'invention sera mieux comprise et d'autres détails et avantages de celle-ci apparaîtront mieux à la lumière de la description qui va suivre donnée uniquement à tire d'example et faite en référence aux dessins annexés dans lesquels:

—la figure 1 représente un servomoteur muni du perfectionnement selon l'invention et représenté en coupe suivant la ligne I—I de la figure 2;

—la figure 2 est une coupe II—II de la figure 1;

—la figure 3 est une vue du renfort annulaire seul selon la ligne de coupe III—III de la figure 2, montrant le profil initial de ce renfort;

—la figure 4 est une autre vue en coupe du renfort seul, suivant la ligne IV—IV de la figure 2 et montrant également le profil initial de ce renfort;

—la figure 5 est une vue de détail illustrant la fixation du servomoteur de la figure 1 à une partie fixe du véhicule; et

—la figure 6 est une autre vue de détail analogue montrant une variante d'exécution du dispositif de la figure 1 dans laquelle de renfort est plaqué contre la paroi du servomoteur avant le montage de l'ensemble sur le véhicule.

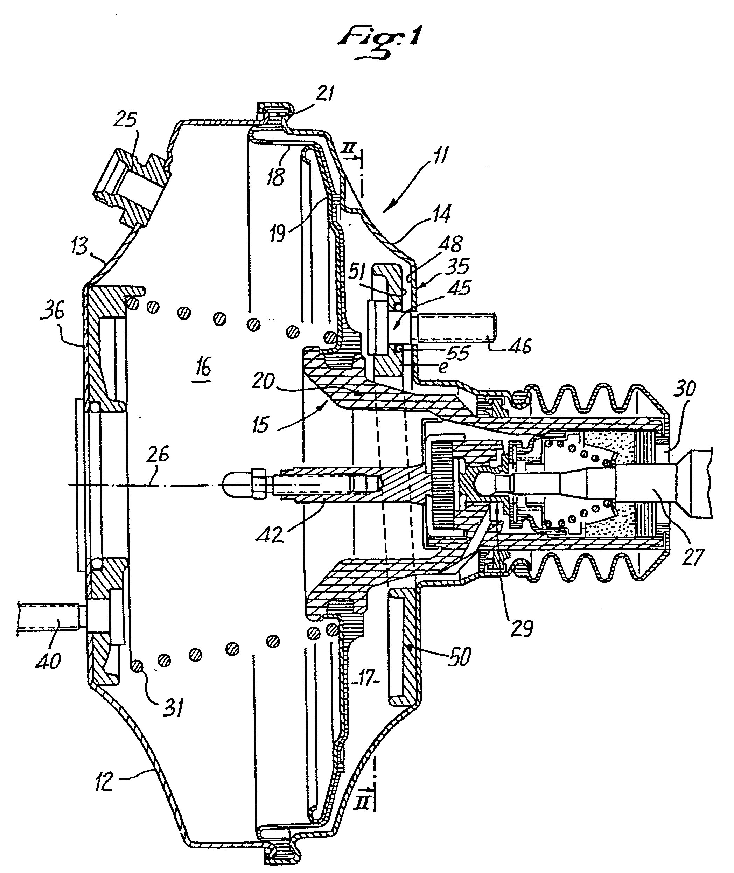

En se reportant aux dessins, on a représenté un servomoteur d'assistance au freinage 11, du type à dépression, équipé du perfectionnement de l'invention. De façon classique, ce servomoteur se compose d'un boîtier 12 composé de deux coquilles 13 et 14 et d'un piston moteur 15 séparant l'espace interne du boîtier 12 en deux chambres de pression 16 et 17. Le piston moteur 15 se compose d'un membrane souple 18, en caoutchouc, d'un plateua rigide 19 et d'un noyau axial 20, en baquélite. Les bords des coquilles 13 et 14 sont conformés pour pouvoir être assemblés par sertissage en enserrant un bourrelet périphérique externe 21 de la membrane 18. La chambre 16 est destinée à être reliée à une source de vide par l'intermédiaire d'un emboût de raccordement 25. Le boîtier 12 admet un axe de symétrie 26 le long duquel une force d'actionnement peut être transmise par l'intermédiaire d'une tige d'actionnement 27, axiale, reliée à la pédale de frein (non représentée). Le noyau 20 abrite également un mécanisme de vanne à trois voies 29 commandé par la tige d'actionnement 27. La structure d'un tel mécanisme de vanne est bien connue dans la technique et ne sera pas décrit en détail car l'invention ne s'y rapporte pas. On rappellera simplement que ce mécanisme de vanne permet, au repos, de mettre la chambre 17 en communication avec la chambre 16 et, lorsqu'il est actionné, de mettre la chambre 17 en communication avec l'atmosphère, par l'intermédiaire d'un orifice 30, de façon à provoquer alors le déplacement de l'ensemble du piston moteur 15, vers la gauche en considérant la figure 1, sous l'effet de la différence de pression dans les chambres 16 et 7. Un ressort 31 prend appui sur la coquille 13 et sollicite le piston moteur 15 dans sa position de repos, telle que représentée sur la figure 1, c'est-à-dire contre la coquille 14.

Le boîtier 12 est conformé de façon à présenter deux parois d'extrémité 35 et 36 sensiblement parallèles. La première paroi 35 est destinée à être fixée à une partie fixe (38, figure 5) du véhicule tandis que la seconde paroi 36 constitue le support du maître-cylindre (non représenté) qui peut être monté dans le prolongement axial de la tige d'actionnement 27, par l'intermédiaire des vis 40 solidaires du boîtier 12, pour recevoir à son entrée la force d'actionnement précitée, notamment par l'intermédiaire d'une tige de poussée 42, axiale, du noyau 20.

Conformément au but de l'invention, le servomoteur 11 est prévu pour être fixé à une partie fixe du véhicule au moyen de seulement deux vis de montage 45, on analogues, dont les parties filetées 46 font saillie vers l'extérieur du boîtier 12, sensiblement perpendiculairement à ladite première paroi 35, tandis que, à l'intérieur du boîtier 12, ces vis 45 sont en contact avec la face interne 48 de la première paroi 35 par l'intermédiaire d'un renfort annulaire 50. Il est à noter que sur la figure 1, le renfort 50 n'est pas représenté dans sa position définitive, après montage du servomoteur, c'est-à-dire plaqué contre toute la surface interne 48. En effet, selon l'invention, le renfort 50 a un profil initial courbe, suivant une direction donnée ménagenat un jeu "e" entre la face interne 48 et deux zones 51 dudit renfort sur lesquelles les vis 45 prennent appui. Cependant, lorsque les vis 45 sont définitivement fixées par rapport au boîtier 12, le renfort 50 est plaqué à force sur sensiblement toute la face internè 48 de la paroi 35 et le jeu "e" disparaît. Cette situation a été illustrée sur les figures 5 et 6.

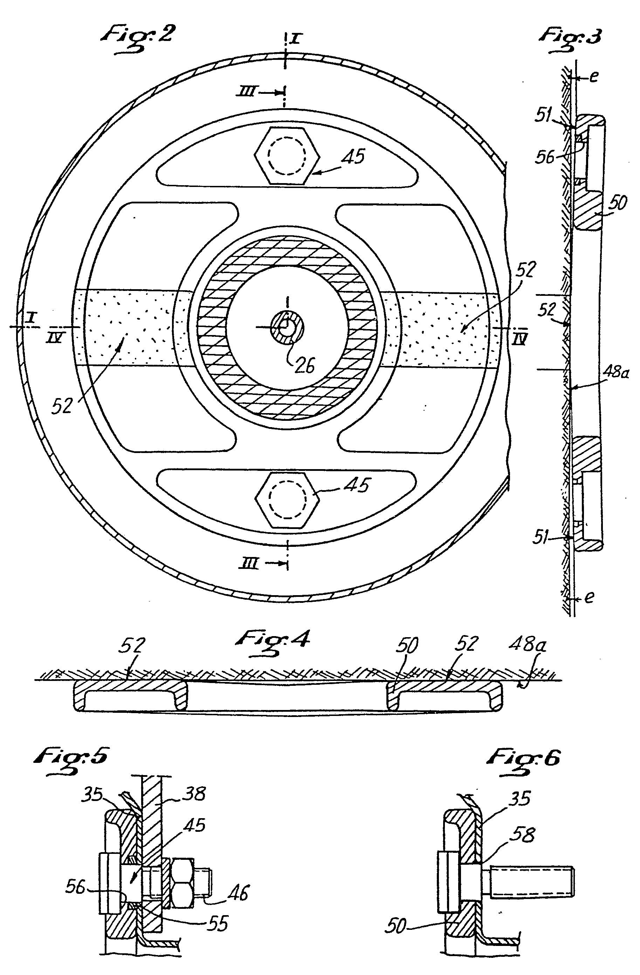

Le profil particulier du renfort 50 ressort clairement des Figures 3 et 4 sur lesquelles ledit renfort est représenté isolé du reste du système et librement posé sur une surface plane de référence 48a qui symbolise la surface interne précitée 48 de la paroi 35. Ainsi, on peut vérifier que dans le mode de réalisation représenté, le renfort 50 a sa concavité orientée vers la surface $48_a$ (figure 4), c'est-à-dire en fait vers la surface interne 48 lorsqu'il est placé dans le boîtier 12, le profil initial courbe précité étant au moins aproximativement orienté suivant une direction perpendiculaire à un diamètre du renfort passant par l'emplacement des vis 45; ladite direction perpendiculaire étant celle du plan de coupe de la figure 4. De cette façon, les zones de contact initial 52 entre le renfort 50 et la surface plane $48_a$ sont sensiblement à 90° par rapport aux emplacements des vis 45, c'est-à-dire, précisément aux endroits où étaient antérieurement disposées les deux autres vis de montage qui peuvent être maintanant supprimées grâce à la forme particulière du renfort 50.

Selon une autre mode de réalisation équivalent, le renfort, avant montage, peut avoir sa convexité orientée vers la face interne de la première paroi et dans ce cas le profil initial courbe dudit renfort doit être au moins approximativement orienté suivant un diametre de celui-ci passant par les emplacements des vis 45. Dans les deux cas, on obtiendra sensiblement le même jeu "e" au voisinage des zones 51 et le contact initial au voisinage des zones 52.

Plusieurs solutions sont possibles pour la fixation définitive des vis 45 par rapport au boîtier 12. Selon la figure 5, cette fixation définitive n'a lieu qu'au moment du montage du servomoteur sur une partie fixe 38 du véhicule. Dans ce cas, le renfort 50 est muni de deux joints d'étanchéité 55 montés autour des trous 56 traversés par les vis 45 et disposés sur sa face orientée vers la paroi 35. Dans ce mode de réalisation, le montage du servomoteur sur le véhicule conditionne à la fois l'étanchéité du servomoteur au niveau des vis 45 et la contrainte du renfort 50.

Selon la variante de la figure 6, les deux vis 45 sont immobilisées définitivement par rapport à la paroi 35 du boîtier au moyen d'un sertissage étanche 58 assurant l'application forcée du renfort 50 contre la face interne de la paroi 35. Le sertissage 58 peut être remplacé par une soudure.

Lorsque le renfort 50 est ainsi plaqué à force, c'est-à-dire containt, contre la surface interne 48, on obtient une meilleure répartition de la réaction du boîtier 12 aux efforts de freinage ramenés à la paroi de montage 35; cette réaction se répartissant sur sensiblement toute la surface de ladite première paroi.

**Revendications**

1. Servomoteur d'assistance au freinage, du type à dépression, comportant un boîtier admettant un axe de symétrie le long duquel une force d'actionnement peut être transmise par l'intermédiaire d'une tige d'actionnement (27) axiale reliée à la pédale de frein, et comprenant deux parois d'extrémité sensiblement parallèles, une première paroi (35) destinée à être fixée à une partie fixe du véhicule et une seconde paroi (36) sur laquelle un maître-cylindre de commande de reinage peut être monté dans le prolongement axial de la tige d'actionnement pour recevoir à son entrée la force d'actionnement, le servomoteur étant prévu pour être fixé à la partie fixe au moyen de deux vis (45) ou analogue dont les parties filetées font saillie vers l'extérieur perpendiculairement la première paroi sensiblement parallèlement à l'axe de symétrie (26) et de part et d'autre de celui-ci et ces vis étant en contact avec la face interne de la première paroi par l'intermédiaire d'un renfort annulaire (50), caractérisé en ce que le renfort (50), a avant montage, un profil initial gauche avec des zones d'appui (51) pour les vis (45) décalées axialement par rapport à des zones de contact initial (52) du renfort avec la face interne de la première paroi (35), ces dernières étant décalées angulairement des zones d'appui (51) de sorte que, lorsque le renfort est placé initialement en contact par ces zones de contact (52) contre la face interne de la première paroi, un jeu axial (e) est ménagé entre la face interne et la face adjacente de chaque zone d'appui (51) du renfort.

2. Servomoteur selon la revendication 1, caractérisé en ce que, le renfort (50) étant prévu pour être plaqué contre la face interne de la première paroi (35) au moment du montage dudit servomoteur sur ladite partie fixe, il comporte des joints (55) d'étanchéité autour de deux trous (56) des zones d'appui (51) traversés par les vis et disposés sur sa face orientée vers la première paroi.

3. Servomoteur selon la revendication 1, caractérisé en ce que les deux vis sont serties à ladite première paroi (35), ce sertissage (58) réalisant l'application forcée du renfort contre la face interne de la première paroi.

4. Servomoteur selon la revendication 1, caractérisé en ce que les deux vis sont soudées à la première paroi (35), cette soudure réalisant l'application forcée du renfort contre la face interne de la première paroi.

**Patentansprüche**

1. Mit Unterdruck arbeitender Hilfskraft-Bremsservomotor mit einem Gehäuse, das eine Symmetrieachse hat, entlang der eine Betätigungskraft über eine mit dem Bremspedal verbundene axiale Betätigungsstange übertragen werden kann, und das zwei im wesentlichen parallel Endwände aufweist, und zwar eine erste Wand (35), die zur Befestigung an einem festen Teil des Fahrzeuges dient, und eine zweite Wand (36), an der ein Hauptbremszylinder in der axialen Verlängerung der Betätigungsstange anbringbar ist, um an ihrem Einlaß die Betätigungskraft zu empfangen, wobei der Servomotor an dem festen Teil mittels zweier Schrauben (45) befestigbar ist, deren Gewindeabschnitte nach außen senkrecht zur ersten Wand, im wesentlichen parallel zur Symmetrieachse (26) und beidseitig zu dieser vorstehen, und wobei diese Schrauben mit der Innensteite der ersten Wand über eine ringförmige Verstärkung (50) in Berührung stehen, dadurch gekennzeichnet, daß die Verstärkung (50) vor ihrem Einbau ein gekrümmtes Anfangsprofil mit Angriffsbereichen (51) für die Schrauben (45) hat, die bezüglich Bereiche (52) eines anfänglichen Kontaktes der Verstärkung mit der Innenseite der ersten Wand axial versetzt sind, wobei diese letzteren in Winkelrichtung bezüglich der Angriffsbereiche (51) derart versetzt sind, daß, wenn die Verstärkung durch diese Kontaktbereiche (52) anfangs mit der Innenseite der ersten Wand in Berührung gebracht wird, ein axiales Spiel (e) zwischen der Innenseite und der angrenzenden Seite jedes Angriffsbereiches (51) der Verstärkung vorhanden ist.

2. Servomotor nach Anspruch 1, dadurch gekennzeichnet, daß die Verstärkung (50), die gegen die Innenseite der ersten Wand (35) im Augenblick der Befestigung des Servomotors an dem besagten festen Teil angelegt wird, Dichtungen (55) um zwei Löcher (56) der Angriffsbereiche (51) herum aufweist, die von den Schrauben durchquert werden und auf der der ersten Wand zugewandten Seite angeordnet sind.

3. Servomotor nach Anspruch 1, dadurch gekennzeichnet, daß die beiden Schrauben durch einen Preßsitz mit der ersten Wand (35) verbunden sind, wobei dieser Preßsitz (58) das Andrücken der Verstärkung an der Innenseite der ersten Wand bewirkt.

4. Servomotor nach Anspruch 1, dadurch gekennzeichnet, daß die beiden Schrauben mit der ersten Wand (35) verschweißt sind, wobei diese Verschweißung das Andrücken der Verstärkung an der Innenseite der ersten Wand bewirkt.

## Claims

1. A brake servo booster of the vacuum type, comprising a casing admitting an axis of symmetry along which an actuating force may be transmitted via an axial actuating rod (27) connected to the brake pedal, and comprising a pair of substantially parallel end walls, a first wall (35) to be connected to a fixed portion of the vehicle, and a second wall (36) on which a brake master cylinder may be mounted in the axial prolongation of the actuating rod for receiving at its entrance the actuating force, the booster being arranged to be connected to the fixed portion by means of a pair of bolts (45) or the like, having threaded portions projecting outwards perpendicularly to the first wall substantially parallel to the axis of symmetry (26) and on both sides of the latter, with these bolts being in contact with the internal face of the first wall via an annular reinforcement (50), characterized in that the reinforcement (50), before mounting, has an initially arcuate profile including application zones (51) for the bolts (55) axially displaced with respect to zones (52) of initial contact of the reinforcement with the internal face of the first wall (35), the latter being displaced angularly of the application zones (51) such that, when the reinforcement is initially placed in contact with the internal face of the first wall by said contact zones (52), an axial play (e) is provided between the internal face and the adjacent face of each application zone (51) of the reinforcement.

2. The servo motor of claim 1, characterized in that the reinforcement (50) which is arranged to be placed against the internal face of the first wall (35) at the moment of the booster being mounted on said fixed part, comprises sealing joints (55) around two holes (56) of the applications zones (51) traversed by the volts and disposed upon the face oriented towards the first wall.

3. The servo motor of claim 1, characterized in that the two bolts are press fitted to said first wall (35), said press fit (58) effecting the forced application of the reinforcement against the internal face of the first wall.

4. The servo motor of claim 1, characterized in that the two bolts are welded to the first wall (35) said weld effecting the forced application of the reinforcement against the internal face of the first wall.

# Fig.1

Fig.2

Fig.3

45

52

26

52

45

51

56

50

52

48a

51

e

e

Fig.4

52

50

52

48a

Fig.5

35

38

45

56

46

55

Fig.6

35

58

50